(19) Europäisches Patentamt

European Patent Office

Office européen des brevets

(11) **EP 1 134 683 A1**

(12) **EUROPEAN PATENT APPLICATION**

(43) Date of publication:
**19.09.2001 Bulletin 2001/38**

(51) Int Cl.⁷: **G06F 17/60**

(21) Application number: **01302380.9**

(22) Date of filing: **14.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.03.2000 GB 0006159**

(71) Applicant: **NCR INTERNATIONAL INC.**
**Dayton, Ohio 45479 (US)**

(72) Inventor: **Nakisa, Ramin Charles**
**Little Chalfont, Buckinghamshire HP6 6QH (GB)**

(74) Representative: **Cleary, Fidelma et al**
**International IP Department**
**NCR Limited**
**206 Marylebone Road**
**London NW1 6LY (GB)**

(54) **Predicting future behaviour of an individual**

(57)     A method of predicting future behaviour of an individual by analysing the content of internet websites already visited by that individual.

The method is useful in customer relationship management for predicting customers' future behaviour including their commercial requirements relating to that behaviour and then communicating appropriately with selected ones of those customers.

**EP 1 134 683 A1**

**Description**

This invention relates to a method and a computer program for predicting the future behaviour of an individual, and is particularly, although not exclusively, useful in customer relationship management for automatically maintaining a relationship between a business and its customers through predictive modelling and data mining.

Customer relationship management (CRM) applications take many forms such as computer programs for effecting direct marketing campaigns and recommendation engines. Although a large volume of information is captured in many industries, such as transaction information for banks, this data is often of little value for accurately predicting a customer's future buying behaviour or his likes and dislikes. In statistical terms, many of the inputs to CRM regression models correlate poorly with future behaviour, and this problem is most acute in the financial services sector, since banks actually know very little about their customers through their existing relationships.

Accordingly, the purpose of the invention is to improve the reliability of such predictions.

The invention provides a method of predicting future behaviour of an individual by analysing the content of internet websites already visited by that individual. By "future behaviour", we mean any activity such as buying, or any action resulting from the individual's preferences, likes and dislikes.

In the context of customer relationship management exercised by a business in relation to its customers, the method preferably comprises predicting customers' future behaviour including their commercial requirements relating to that behaviour and then communicating appropriately with selected ones of those customers.

In one preferred embodiment, with the express permission of customers, their own lists of most recently visited websites form an input to the CRM predictive models. This data is continually collected by web browsers such as Internet Explorer and Netscape: the advantage of this automation is that data collection is passive, not requiring customers to fill in tedious and lengthy questionnaires about their likes and dislikes. It is also more reliable than requiring customers to fill in such forms. A great deal can be inferred about people from their web browsing behaviour, such as their interests, lifestyle and leisure activities, and this richer profile is capable of improving the predictive accuracy of CRM applications.

Thus the method preferably comprises combining text from a plurality of the visited websites, identifying a plurality of the most informative words of that text, and using data representative of those most informative words as inputs to an automated predictive model whose outputs indicate the individual's likely future behaviour.

This preferably involves the step of identifying, for words of the combined text, their frequency of occurrence in the combined text and also of their occurrence in a large text corpora in the same language, and selecting as the said most informative words those whose said frequency of occurrence is significantly greater in the combined text than in the large text corpora.

Preferably, the method comprises identifying, from a database of semantic vectors derived from co-occurrence statistics, the semantic vector of each of the said most informative words, and using the semantic vectors as the said representative data.

It is preferred that the number of most informative words is predetermined so as to optimise the trade-off between a sufficient predictive accuracy and a reasonable computation time. In order to achieve such an optimum, the method can be extended to involve varying the said number of most informative words in order to determine its optimum, by re-fitting the predictive model for each value of the number and noting the predictive accuracy and the time taken. A predictive accuracy can be determined by cross-validation procedures which are well known in predictive modelling.

The invention also involves a computer program for carrying out the methods described above, and also to such a computer program stored on a data carrier, and also to data processing apparatus arranged to carry out the method described.

In order that the invention may be better understood, examples will now be described, but it will be appreciated that the invention has many different potential applications not all of which will use all the preferred features of the examples described.

A customer relationship management system for financial services businesses will now be described. For example, it could be used by a bank offering mortgages. A customer of the bank may for example be considering buying a house, so she looks at various house buying sites on the web. The list of websites and the pages that she looks at are stored by her web browser on her home PC. Her bank has already arranged with her that they can offer her a better service if she gives them access to her web browser's store of most recently visited websites. Thus a piece of software installed on her home computer (PC) sends her browser's most recently visited websites to the bank regularly. As a consequence, the bank has several entries in her web browsing profile for the word "house" and "semi-detached" and "Lincolnshire". Vectors representing these words are used as inputs to the bank's logistic regression model which predicts who should get a mortgage offer mailshot, and it uses these highly informative pieces of information for giving this customer a high probability of needing a mortgage in the near future. The bank achieves this using its predictive model which has previously been trained using a data warehouse of past browsing behaviour and mortgage buying activity. The CRM may be a simple comparison process which compares the input web behaviour information against information from people who have had similar browsing profiles in the past and have taken out a mortgage shortly afterwards. Thus this customer is included in the mailing list for the mailshot.

Thus the first step of the preferred method is to collect a file containing a list of the most recently visited websites from the customer's computer.

The second step is to download HTML referred to in each of the websites in the list, and to combine all the text into a single text file. Preferably, all the text is used from each site, but it would be possible to select just parts of it, such as the keywords or metatags.

The third step is to identify the most "informative" plain text words in the HTML combined file. The degree of informativeness of a word is proportional to how much its frequency differs between its occurrences in the HTML file and in a standard large text corpora in the same language, such as the British National Corpus. Such text corpora should typically contain at least one hundred million words. The reasoning behind this is that words which occur more frequently than in normal use are likely to be significant in the context, and thus informative. The frequency of occurrence should be represented as a fraction of all words in the language corpus and the HTML file, so as to discriminate between words that occur just once in the large language corpus.

Other methods of measuring informativeness may of course be used. The most general definition of "informativeness" would be the mutual information between the behaviour being predicted and occurrences of the word in the browsed site text file. If the possible behaviours of the customer are defined as a vector of outcomes $y_1, y_2, ... y_n = y$ and the frequency of word $i$ is defined as $x_i$ then the mutual information between occurrence of each word and possible behaviours is defined as

$$I(x_i; y) = \sum_{y \in Y} \frac{p(x_i, y)}{p(x_i) p(y)}$$

(see Cover and Thomas, 1991, *Elements of Information Theory,* New York: Wiley). The symbol $Y$ represents all possible values of $y$, i.e. all possible behaviours. In practice it would be very computationally costly to calculate $I(x;y)$ exactly for every word $x_i$ in the language, so faster approximations to $I(x;y)$ have to be used, such as the keyword method defined in this specification.

The next step is to rank the words according to their informativeness and to take the top k most informative words. If the number k has already been optimised for the particular application involved, then it is regarded as a fixed number. However, the number k can be treated as a variable in order to carry out an optimising process.

The next step is to look up, in a predetermined database of semantic vectors derived from co-occurrence statistics, the semantic vector for each of the top k informative words. The construction of numerical vectors that represent the "meaning" of a word, or the word's "semantic vector", is a well established technique in computational linguistics, as described in Brown, P.F., Della Pietra, V. J., de Souza, P.V. Lai, J.C. (1992). Class-based n-gram models of natural language. Computational Linguistics, 18(4), 467-479.; and also in Patel, M., Bullinaria, J. A. and Levy, J. P. (1997), Extracting Semantic Representations from Large Text Corpora, Proceedings of the Fourth Neural Computational and Psychology Workshop 1997, London; and in Christopher d. Manning, Hinrich Schutze, Foundations of Statistical Natural Language Processing, July 1999, Mit Pr. ISBN : 02621 33601.

The construction of the semantic vectors involves the construction of a word co-occurrence matrix that goes through a large corpus of text and counts how many times pairs of words occur together within a window of, say, 10 words. The resulting vector for each word represents the kind of verbal environment in which it occurs, and this has been shown to be a good indicator of the meaning of the words. For this reason, it is better to use the semantic vectors, as inputs to the predictive model, than the words themselves. The words alone cannot convey their meaning.

An example of the results of a cluster analysis of the semanatic representations of words is given in Annex 1 hereto. The example is takem from Reddington, M. & Chater, N. (1997), Probabilistic and distributional approaches to language acquisition, *Trends in Cognitive Sciences*, 1(7) 273-289 and illustrates manually extracted low-level clusters of nouns, verbs and adverbs from a dendogram resulting from a word level analysis of the distributional statistics of the CHILDES corpus.

In the preferred example, the semantic vectors of a large vocabulary of words in English are stored in a database, and the method involves simply looking up the semantic vector for each of the top k most informative words. The database may include vocabularies in more than one language, in which case it is necessary to select the appropriate language.

The k semantic vectors are appended together, and used as regressors or input variables for a single CRM predictive model. Automated predictive modelling using neural networks or statistical models or rule-based models is well known and need not be described in this specification. The logistic regression model described above is a statistical model.

Although not essential, it is a preferred feature to determine the optimum value of k. This is carried out by increasing k from 1 upwards, iterating the steps of ranking the words according to informativeness, looking up the semantic vectors, appending the k vectors and using them as regressors. With each iteration of k, the predictive model is refitted, and the time taken to fit the model is measured; also, the predictive accuracy of the model is measured using cross-validation, a conventional technique in neural networks.

k is optimised in the context of the particular application, trading off predictive accuracy against computational time taken.

The word co-occurrence matrix described above is obviously very large, and could be as large as n x n, where n is the number of words in the given language. This can be reduced, to improve efficiency, by singular value decomposition, using principal components analysis (PCA) to reduce the dimensions of the co-occurrence matrix. Reducing the dimensionality of the semantic vectors increases the speed of CRM predictive models using those vectors as inputs. Again, this is an established technique and need not be described in this specification.

Once the value of k has been optimised for a given application, it can be used as a predetermined number in future operations of the method.

It will be understood that the outputs of the CRM predictive model are indicative of the likely future behaviour of the individual concerned. In the example of house buying and mortgage selling given above, the significant words were "house", "semi-detached" and "Lincolnshire", and the corresponding semantic vectors would be appended and fed into the logistic statistical CRM predictive model as regressors, leading to outputs indicative of "mortgage" amongst others.

The predictive model must be set up or trained in advance. If it is a neural net, it is trained using information about real behaviour resulting from previous behaviour, e.g. about people (customers or otherwise) who have taken out mortgages and who previously visited websites with particular text content. If it is a statistical or a rule-based model, that information about real behaviour is used to set up the model.

The web-browsing information could be just part of the input to the predictive model. Other inputs could include, for example, other customer profile information such as their age and the balances of their bank accounts.

The system is of course applicable to a wide range of customer relationship management processes. Other examples might be using web browsing behaviour to indicate whether the individual takes risks or is cautious financially; and to indicate likes and dislikes in products purchased, or in types of communication, or in methods of doing business. Web browsing behaviour may also indicate the number of people in the household, and possible relationships with other customers or potential customers.

It will be understood that the CRM process, including the steps identified above, would be implemented on data processing apparatus as a computer program; the computer program could be resident in a business premises, or anywhere in a network such as on the internet itself.

It will also be understood that the websites included in the list could optionally include websites not visited but linked to the visited websites. Further, it will be appreciated that information on the numbers of visits of the websites could also be used, for example to give frequently visited websites greater weight in the combined text file. If a particular website was visited three times, for example, then the text could simply be included three times in the combined HTML file. More weight could also be given to sites that have been visited recently.

**ANNEX 1**

**Claims**

1.  A computerised method of predicting future behaviour of an individual by using a computer program to analyse the content of internet websites already visited by that individual.

2.  A method according to Claim 1, carried out by a business in relation to its customers or potential customers as individuals for customer relationship management, the method comprising using a predictive model to predict customers' future behaviour including their commercial requirements relating to that behaviour and then communicating appropriately with selected ones of those customers.

3.  A method according to Claim 1 or 2, comprising combining text from a plurality of the visited websites, identifying a plurality of the most informative words of that text, and using data representative of those most informative words as inputs to an automated predictive model whose outputs indicate the individual's likely future behaviour.

4.  A method according to Claim 3, comprising the step of identifying, for words of the combined text, their frequency of occurrence in the combined text and also of their occurrence in a large text corpora in the same language, and selecting as the said most informative words those whose said frequency of occurrence is significantly greater in the combined text than in the large text corpora.

5.  A method according to Claim 3 or 4, comprising identifying, from a database of semantic vectors derived from co-occurrence statistics, the semantic vector of each of the said most informative words, and using the semantic vectors as the said representative data.

6.  A method according to Claim 5, in which the number of the most informative words is a predetermined number appropriate to give sufficient predictive accuracy in a reasonable amount of computation time.

7.  A method according to Claim 6, comprising varying the said predetermined number of most informative words in order to determine its optimum, by refitting the predictive model for each value of the number and noting the predictive accuracy and the time taken.

8.  A method according to Claim 7, comprising determining the predictive accuracy by a cross-validation procedure.

9.  A computer program for predicting future behaviour of an individual by analysing the content of internet websites already visited by that individual.

10. A computer program for customer relationship management, the program being effective to analyse the content of internet websites already visited by customers and to predict those customers' future behaviours including their commercial requirements relating to those behaviours.

11. A computer program according to Claim 10, further effective to allow a business operating the program to communicate appropriately with selected ones of those customers.

12. A computer program according to any of Claims 9 to 11, effective to combine text from a plurality of the visited internet websites, to identify a plurality of the most informative words of that text, and to use data representative of those most informative words as inputs to an automated predictive model whose outputs indicate the individual's likely future behaviour.

13. A computer program according to Claim 12, comprising the step of identifying, for words of the combined text, their frequency of occurrence in the combined text and also of their occurrence in a large text corpora in the same language, and selecting as the said most informative words those whose said frequency of occurrence is significantly greater in the combined text than in the large text corpora.

14. A computer program according to Claim 13, comprising identifying, from a database of semantic vectors derived from co-occurrence statistics, the semantic vector of each of the said most informative words, and using the semantic vectors as the said representative data.

15. A computer system arranged to execute the computer program of any of Claims 9 to 14.

**European Patent
Office**

**DECLARATION**

which under Rule 45 of the European Patent Convention
shall be considered, for the purposes of subsequent
proceedings, as the European search report

**Application Number**

EP 01 30 2380

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (Int.Cl.7)<br><br>G06F17/60 |
|---|---|

The subject-matter claimed in claims 1-8 falls under the provisions of Article 52(2) and (3) EPC, such subject-matter relating to a method of doing business as such.

Claims 9-15 relate to a conventional computer program and system for performing the business method of claims 1-8. Although these claims do not literally belong to the method category, they essentially claim protection for the same commercial effect as the method claims. The Search Division considers that searching this subject-matter would serve no useful purpose. It is not at present apparent how the subject-matter of the present claims may be considered defensible in any subsequent examination phase in front of the EPO with regard to the provisions of Articles 54 and 56 EPC (novelty, inventive step); see also Guidelines B-VII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 13 July 2001 | Pedersen, N |

EPO FORM 1504 (P04C37)